# EUROPEAN PATENT SPECIFICATION

(11) **EP 2 321 695 B1**
(45) Date of publication and mention of the grant of the patent: **30.05.2012**
(21) Application number: 09786773.3
(22) Date of filing: 31.07.2009
(51) Int. Cl.: G02F 1/167

(54) **A MOVING PARTICLE DISPLAY DEVICE**
ANZEIGEANORDNUNG FÜR BEWEGLICHE TEILCHEN
DISPOSITIF D'AFFICHAGE À PARTICULES MOBILES

(30) Priority: 07.08.2008 EP 08162005
(43) Date of publication of application: 18.05.2011
(73) Proprietor: Adrea LLC, Sunnyvale, CA 94085 (US)
(72) Inventor: MUELLER, Manfred, NL-5656 AE Eindhoven (NL); STROEMER, Jan, F., NL-5656 AE Eindhoven (NL)
(74) Representative: Williams, Michael Ian
(86) International application number: PCT/IB2009/053344
(87) International publication number: WO 2010/015979

(56) References cited:
- WO-A2-2007/132411
- US-A1- 2004 036 951

## Description

### FIELD OF THE INVENTION

The invention relates to moving particle displays, and in particular to a pixel electrode layout for such displays.

### BACKGROUND OF THE INVENTION

Previous moving particle displays, such as electrophoretic displays, have been known for many years.

The fundamental principle of electrophoretic displays is that the appearance of an electrophoretic material encapsulated in the display is controllable by means of electrical fields.

To this end the electrophoretic material typically comprises electrically charged particles having a first optical appearance (e.g. Black) contained in a fluid such as liquid or air having a second optical appearance (e.g. White), different from the first optical appearance. The display typically comprises a plurality of pixels, each pixel being separately controllable by means of separate electric fields supplied by electrode arrangements. The particles are thus movable by means of an electric field between visible positions, invisible positions, and possibly also intermediate semi-visible positions. Thereby the appearance of the display is controllable. The invisible positions of the particles can for example be in the depth of the liquid or behind a black mask.

One design of an electrophoretic display is described by e ink corporation in, for example, WO99/53373.

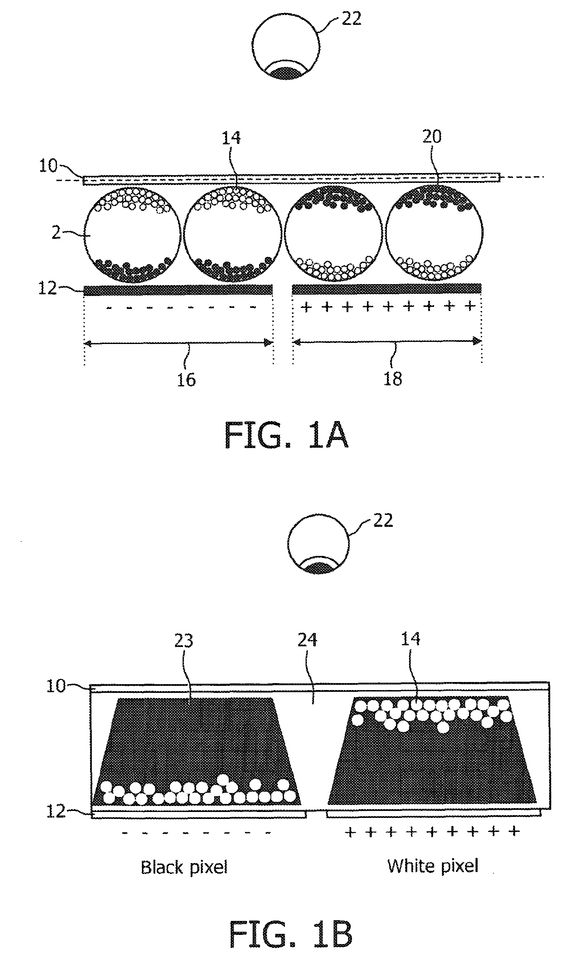

This design uses a layer of transparent micro-cavities filled with electrically charged colored particles suspended in a liquid as shown in Fig. 1a. The micro-cavities 2 are sandwiched between a transparent electrode layer 10 and an electrode layer 12 in the form of a pixellated tft backplane. The term "cell" is used in this description and claims to refer to these micro-cavities, although it will be understood that different cell designs to those in Fig. 1 and described in WO99/53373 can be used.

If an electric field is applied, the particles move according to their charge and the field's polarity. The type of particle closest to the transparent electrode 10 determines the color of the pixel. If white particles 14 are closest to the electrode the pixel will appear white, as shown for pixel 16. If black particles 20 are closest to the electrode 10 (and therefore closest to the viewer 22) the pixel will appear black, as shown for pixel 18.

Different electrophoretic inks use different types of micro cavities (cups or capsules), different numbers of particle types, colored or transparent fluids, regular or irregular arrangements of the cavities etc.

A slightly different technology for electronic paper is available from sipix imaging inc. The technology is based on embossed microcups instead of capsules, and a colored fluid with only one type of colored particle. The microcups are arranged in a regular array.

The design is shown schematically in Fig. 1b. Microcups 23 are filled with an absorbent fluid. The microcups are defined in a transparent plastic substrate 24, and the design also has transparent top electrodes 10 and opaque bottom electrodes 12. White particles 14 are provided in the microcups.

It has been recognised that electrophoretic display devices enable low power consumption as a result of their bistability (an image is retained with no voltage applied), and they can enable thin and bright display devices to be formed as there is no need for a backlight or polariser. They may also be made from plastics materials, and there is also the possibility of low cost roll-to-roll processing in the manufacture of such displays.

If costs are to be kept as low as possible, passive addressing schemes are employed. The most simple configuration of display device is a segmented reflective display, and there are a number of applications where this type of display is sufficient. A segmented reflective electrophoretic display has low power consumption, good brightness and is also bistable in operation, and therefore able to display information even when the display is turned off.

However, improved performance and versatility is provided using a matrix addressing scheme. An electrophoretic display using passive matrix addressing typically comprises a lower electrode layer, a display medium layer, and an upper electrode layer. Biasing voltages are applied selectively to electrodes in the upper and/or lower electrode layers to control the state of the portion(s) of the display medium associated with the electrodes being biased. In an active matrix scheme, pixel circuits are provided to control the application of control voltages to individual pixels, and to retain these voltages when other pixels are being addressed. A pixel can comprise a single cell or multiple cells.

It has been recognised that electrophoretic displays are the most promising solution for electronic paper. Although first mass-market products are being introduced, the technology has still significant drawbacks which prevent it from being commercially successful. The most important problems are the slow switching speed, the low brightness (the "white" state is really a light grey), and the limitation to two colors (usually black and white). It is possible to use color filters to create additional colors, but this is at the expense of brightness.

The document US 2004/0036951 describes an electrophoretic display device in which a number of grey values (intermediate optical states) can be achieved with a single pixel having at least one type of charged, coloured particle. Different combinations of voltages of the three electrodes can provide different electric field lines in the individual pixels in order to create configurations of particles that present different shades of the colour of the coloured particle.

### SUMMARY OF THE INVENTION

It is an object of the invention to provide a moving particle display device with an improved switching speed.
According to the invention, there is provided a moving particle display device, comprising: an array of display cells, each display cell comprising an enclosed volume containing display particles and a fluid, and a first electrode arrangement including first and second sub-electrodes and a second electrode arrangement including a counter electrode, with the display cells disposed between the first and second electrode arrangements, and the particles being provided for movement between a first region adjacent the first electrode arrangement and a second region adjacent the second electrode arrangement, wherein each display cell is associated with a group of electrodes used to control the particle movement within the display cell, wherein for most of the display cells, the group of electrodes is arranged to provide asymmetry in the electric field lines in the enclosed volume, thereby to influence the particle flow conditions within the display cell,
characterised in that an electronic circuit element is connected between the sub-electrodes, and the electronic circuit element is arranged to produce a time difference between the voltage at one sub-electrode with respect to the voltage at the other sub-electrode when a voltage waveform is applied to the first electrode arrangement.

The asymmetry introduced into the electric field lines is used to derive a drive scheme in which a faster and predictable flow pattern is introduced into the cells. Preferably, this asymmetry is provided to more than 60 % of the cells, even more preferably more than 80 % and even more preferably more than 90 % of the cells.

In one arrangement, the group of electrodes comprises a first electrode set of the first electrode arrangement and a second electrode set of the second electrode arrangement, wherein one of the first and second electrode sets comprises at least two electrodes thereby defining sub-electrodes, wherein different voltage waveforms are applied to the at least two sub-electrodes, thereby to influence the particle flow conditions within the display cell.

Thus, providing at least one electrode arrangement as multiple sub-electrodes can be used to introduce the asymmetry.

In one arrangement, the first set of electrodes comprises upper electrodes and the second set of electrodes comprise lower electrodes, with the display cells sandwiched between the sets of electrodes, and wherein the sub-electrodes are provided on opposite lateral sides of the cell. If the opposite electrode arrangement has a single electrode, this creates a triangle of electrodes, and these can be used to generate a rotational flow within the cells.

An electric circuit element is connected between the sub-electrodes, such that a single drive voltage waveform applied to one sub-electrode gives rise to a different output voltage waveform on the other sub-electrode. This means only one pixel circuit is required, and the circuit between the sub- electrodes can act as a delay. The circuit can be very simple, for example it can be a capacitor. In another possible configuration the sub-electrodes can be drivable with independent voltage waveforms, so that any desired drive sequence can be generated.

The one of the upper and lower electrode arrangements can comprise exactly two sub-electrodes associated with each cell, and the other of the upper and lower electrode arrangements can comprise a single electrode associated with each cell. As is conventional for matrix addressing schemes electrodes and sub electrodes can be shared between the cells in rows or columns.

In another arrangement, the first electrode arrangement comprises a first regular electrode pattern and the electrode arrangement comprises a second regular electrode pattern, wherein a plurality of the cells are located at positions which are offset from the intersection of any axes of symmetry of the first and second electrode arrangements. The shape of the electrodes is then used to provide the desired asymmetry, without requiring multiple drive voltages to the electrodes of each cell.

For example, the first electrode arrangement can comprise a common electrode comprising a continuous layer with a regular array of openings, and the second electrode arrangement can comprise a regular array of electrode pads aligned with the openings.

The device is preferably an electrophoretic display device. For example, each cell can comprise first and second types of particles with opposite charge, for example black particles of one charge and white particles of the opposite charge.

One of the electrode arrangements can be provided over a substrate which comprises a series of recesses for housing the cells. By aligning the electrodes with respect to the recesses, this provides alignment between the cells and the sub-electrodes, even if the cells are non-uniform in size and shape. The recesses can for example be straight grooves.

Each groove can have two side faces, electrodes on each side face.
The invention also provides a method of manufacturing a moving particle display device, comprising: forming a first substrate with a series of recesses, providing an array of electrodes on the first substrate, the array comprising sub-electrodes which are aligned with respect to the recesses, wherein a facing pair of sub-electrodes forms a first electrode set for a display cell, locating an array of display cells in the recesses, each cell comprising an enclosed volume containing display particles, and sandwiching the cells between the first substrate and a second substrate which carries a second electrode arrangement, characterised in that the method includes assembling an electronic circuit element between the sub-electrodes, wherein the electronic circuit element is arranged to produce a time difference between the voltage at one sub-electrode with respect to the voltage at the other sub-electrode when a voltage waveform is applied to the first electrode arrangement.

This manufacturing method enables the cells to be aligned with the sub- electrodes, so that a drive scheme using the sub-electrodes provides a predictable desired flow within the cells. This is of particular interest for technologies using irregular cells sizes or shapes, rather than for technologies which already have regular cells arrays.
The invention also provides a method of driving a moving particle display device, comprising applying drive signals to a first electrode arrangement including first and second sub-electrodes, and a second electrode arrangement including a counter electrode, with a plurality of display cells sandwiched between the first and second electrode arrangements, the display cells comprising particles which are provided for movement between a first region adjacent the first electrode arrangement and a second region adjacent the second electrode arrangement, wherein the method comprises applying voltage waveforms to the electrode sets to control the particle movement within the cell, wherein for most of the cells, the sets of electrode are arranged to provide asymmetry in the electric field lines in the enclosed volume, thereby to influence the particle flow conditions within the display cell, characterised in that an electronic circuit element is connected between the sub-electrodes, and the electronic circuit element is arranged to produce a time difference between the voltage at one sub-electrode with respect to the voltage at the other sub-electrode when a voltage waveform is applied to the first electrode arrangement.

### BRIEF DESCRIPTION OF THE DRAWINGS

Further features of the invention will become apparent from the following non-limiting examples, and with reference to the accompanying drawings, in which:
Figs. 1a and 1b show known types of electrophoretic display devices;
Fig. 2 shows a comparison of the electrophoretic particle and ion velocities versus the fluid velocity in an electrophoretic cell;
Figs. 3a and 3b illustrate .s schematically a typical flow pattern within a cell (Fig. 3a) and a flow pattern to be approximated by the device of the invention (Fig. 3b);
Fig. 4 is a microscope image that shows how cells in real-world displays are typically not be uniformly white;
Figs. 5a and 5b are used to explain flow conditions within the cell;
Fig. 6 shows a first example of display cell layout of the invention;
Fig. 7 shows how the layout of Fig. 6 improves the switching speed;
Fig. 8 shows the flow conditions in the cell layout of Fig. 6;
Fig. 9 shows a second example of display cell layout of the invention;
Fig. 10 shows microscopic images depicting how the invention has improved color uniformity of a display;
Fig. 11 shows a third example of display cell layout of the invention in cross section;
Fig. 12 shows the display cell layout of Fig. 11 in plan view.
Figs. 13a and 13b show a known display cell layout and a fourth example of cell layout of the invention in plan view; and
Figs. 14a and 14b show cross sections for the layouts of figs. 13a and 13b.

It should be noted that these figures, are diagrammatic and not drawn to scale. For the sake of clarity and convenience, relative dimensions and proportions of parts of these figures have been shown exaggerated or reduced in size. The same reference numerals are used throughout the figures in order to indicate the same or similar features.

### DETAILED DESCRIPTION OF THE EMBODIMENTS

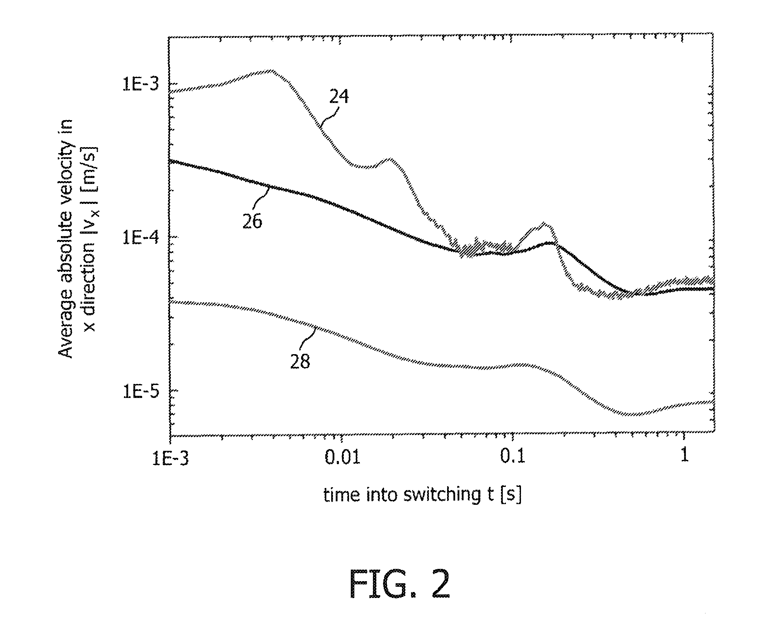

The invention has been achieved based on recent advances in the modeling of electrophoretic displays. These have yielded new insights into how electrophoretic ink works. Especially, the invention is based on the recognition that the fluid is much more important for the switching process than previously suspected. In fact, being swept away by the fluid flow is by far the fastest transport mechanism for the particles, as shown in Fig. 2. Unfortunately the fluid flow pattern usually consists of small eddies, which are inefficient at particle redistribution.

Fig. 2 shows the speed comparison of the fluid velocity (plot 24) and the drift velocities of positive ions (plot 26) and of colored particles (plot 28). The drift velocity is the velocity of the particles relative to the fluid, due to the applied electrical field. Depicted are the average absolute velocities in the direction perpendicular to the electrodes, versus time. The graph shows that the fluid flow rather than the particle drift is the fastest transport mechanism during the switching (the particles are effectively swept away with the fluid).

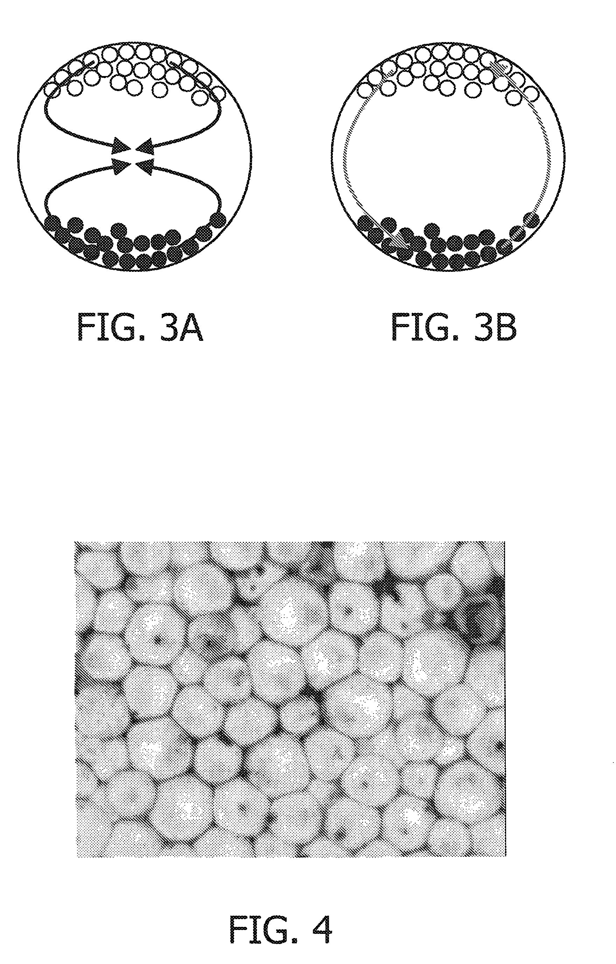

Fig. 3 is used to show the principle of optimizing the fluid flows to improve the performance of electrophoretic ink. Fig. 3a schematically shows the normal, non-optimized flow pattern, and Fig. 3b shows a desired, optimized flow pattern.

The general form of the normal fluid flow patterns present in a circular capsule with black and white particles is shown in Fig. 3a. This is a strongly simplified representation. In reality the pattern is constantly changing, depending on the interaction between the electrical field, the particles, the ions, the fluid and the capsule wall. Generally the pattern consists of multiple small eddies. These small eddies are very ineffective for the switching of the electrophoretic display (i.e. In exchanging the position of the black and white particles).

While this example depicts an electrophoretic display using two differently charged particles types, the same principles apply to systems using only one or three or more different particle types. If only positively or only negatively charged particles are present then oppositely charged ions will cause a fluid pattern to evolve which is very similar to the pattern in a system using oppositely charged particles.

Ideally an optimized flow pattern consisting of only one big eddy is desired, as illustrated in Fig. 3b. In this case, the particles can just move with the flow, resulting in a greatly reduced switching time.

The flow pattern not only strongly influences the switching speed; it also determines the particle pattern resulting from the switching and therefore the maximal achievable brightness. For example, commercially available electrophoretic inks often show black dot or ring patterns during a nominally white state. This is shown in Fig. 4, in which a blacker dot pattern can be seen on most of the white capsules. This greatly reduces the brightness of the white state.

The relationship between common black patterns and the flow pattern can be shown in simulations. The invention is based on the recognition that using improved flow patterns, similar to the one depicted in Fig. 3b, the normal ring or dot patterns are eliminated and therefore the brightness of the foil is increased.

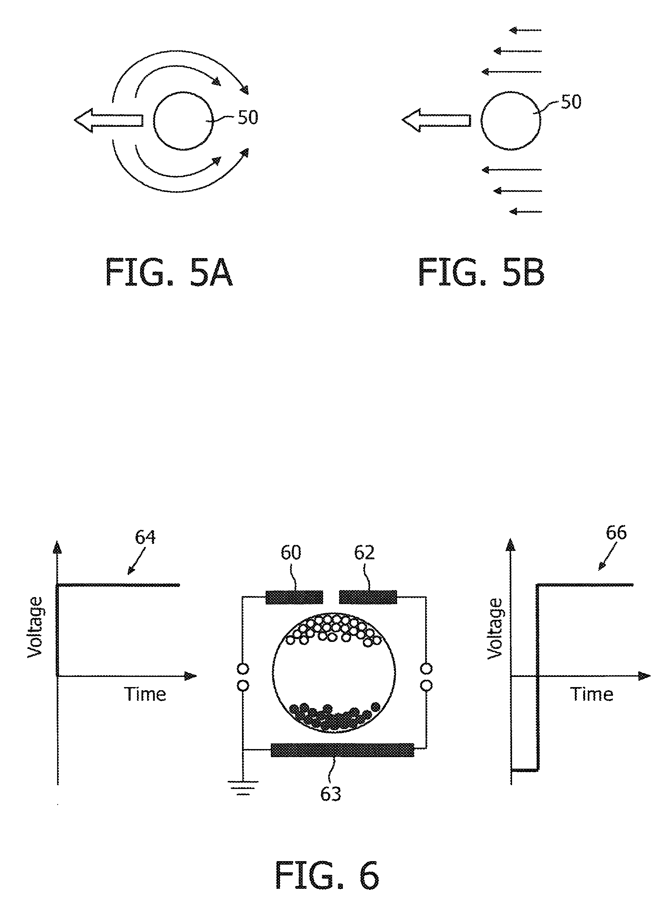

The fluid flow is caused by the movement of particles and ions, due to drag and displacement, as illustrated in Fig. 5. Since the fluid is incompressible, any movement of a charged particle/ion 50 in the enclosed space of the micro cavity means that something (usually the fluid) has to move in the opposite direction (Fig. 5a). In addition, the viscosity of the fluid means that any moving charged particle/ion will drag a part of the surrounding fluid along with it (Fig. 5b). In both figures the large arrow outlines indicate the movement direction of the charged particle/ion 50, while the thin arrows indicate the movement direction of the surrounding fluid.

The movement of the charged particles and ions in turn is driven by the applied electrical field, but it is also strongly determined by the fluid flow. The flow pattern is therefore the result of a very complex interaction between the electrical field, the particles, the ions, the fluid and the capsule wall with a strong feedback mechanism. Moreover, the fluid pattern is not stable, but is changing along with the distribution of the ions and particles. Optimizing the fluid pattern is therefore a complex task which can only be accomplished by modeling or experiment.

The invention provides architectures which aim to optimize the fluid flow and subsequently increase the switching speed of the device. Also the resulting brightness of the device can be increased by an optimized flow pattern. In particular, the invention provides a moving particle display device in which display cells are driven by an upper electrode arrangement and a lower electrode arrangement. One of the arrangements comprises at least two sub-electrodes, and different voltage waveforms are applied to the at least two sub-electrodes, thereby to influence the particle flow conditions within the display cell.

In this way, the fluid flow is modified by changing the applied electrical field by using a structured electrode. The structures are smaller than the size of the display cells.

A first example is shown in Fig. 6. At least one electrode is structured in such a way that each micro-cavity is covered by more than one independently addressable sub-electrode. The top of the micro cavity is contacted by two sub-electrodes 60,62, which can be addressed individually, e.g. By two tfts. The bottom of the cavity is contacted with a single electrode 63 in known manner. To switch the state of the cavity, different driving waveforms are applied to the various sub-electrodes as shown schematically as 64 and 66. In the example given in Fig. 6, one side of the cavity is driven with a simple voltage pulse 64, while the other side is first driven with a short counter pulse (for example for ten to a few hundreds of milliseconds) then with the same voltage pulse as the other half. This is shown as voltage profile 66.

Simulation results show that one important requirement for creating an efficient flow pattern according to Fig. 3b is to break the flow symmetry. In Fig. 3a, a vertical line through the center of the capsule is a symmetry axis. Accordingly the fluid pattern in Fig. 3a is mirror and rotation symmetric. To create an asymmetric flow pattern (as in Fig. 3b) either an asymmetric electrode structure or an asymmetric capsule form is required. The invention is directed to the provision of an asymmetric electrode structure.

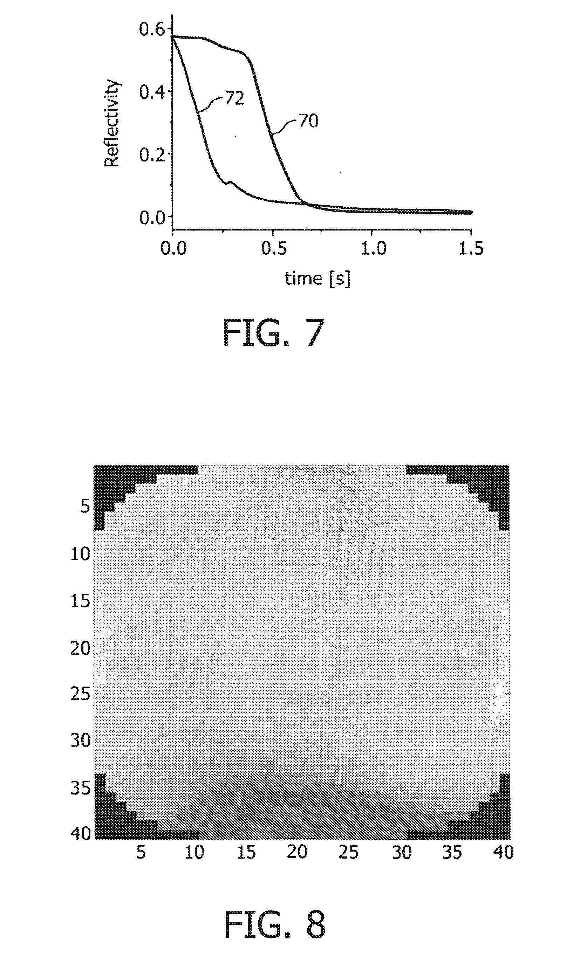

Fig. 7 shows the simulated switch-to-black optical response of an electrophoretic display device according to Fig. 6 (plot 70), compared with a normal ink device with unstructured electrodes (plot 72). The switching of the ink using structured electrodes is much faster than the switching of the same ink using standard electrodes. The performance gain is greater in the white-to-black direction than in the black-to-white direction.

Fig. 8 shows a snapshot from a simulation of the fluid flows in the device according to Fig. 6 taken only 41ms after the voltage pulses are first applied. The figure shows the fluid velocity distribution as arrows, and these form a clockwise path. The fluid pattern thus shows one big eddy very much like the desired flow pattern in Fig. 3b, which very effectively transports the particles from one side to the other. The grey density in the image shows the concentration distribution of black particles.

The arrangement of Fig. 6 can be combined with an optimized driving scheme as the sub-electrodes are independently addressable, and the form of the cavity can also be selected to optimise the flow conditions.

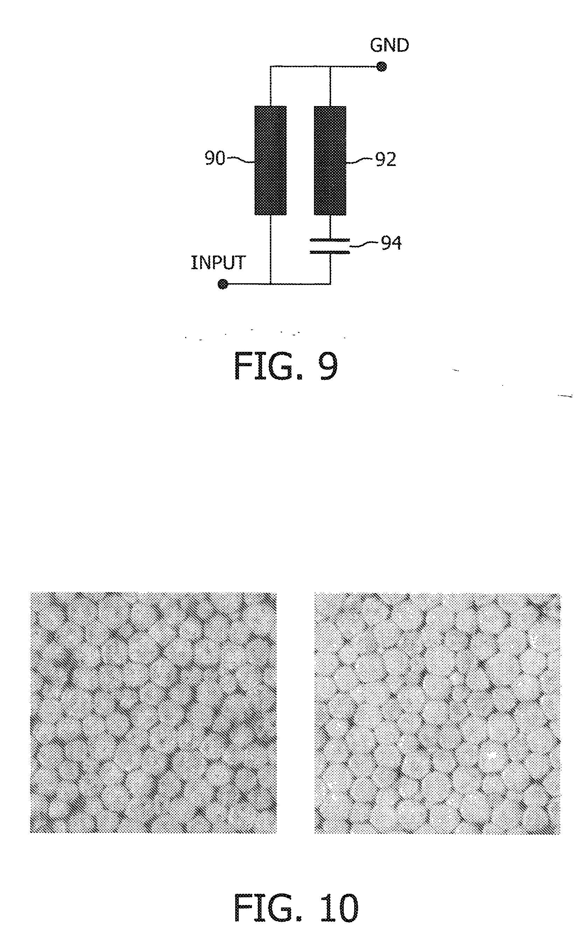

A second embodiment shown in Fig. 9 again uses sub-electrodes 90,92, so that each micro-cavity is covered by more than one sub-electrode. However, the sub-electrodes are not individually addressable, but the sub-electrodes are electrically connected using a circuit. In the example shown, the circuit 94 is a capacitor. A single drive voltage waveform applied to one sub-electrode 90 gives rise to a different output voltage waveform on the other sub-electrode 92.

The circuit introduces a temporary potential difference between the sub-electrode voltages. For the example of a capacitor, the second sub-electrode 92 will reach the full potential with a delay determined by the capacitor loading curve. This embodiment needs one tft per pixel so does not introduce any significant additional complexity to the conventional pixel circuitry. The device design in combination with a suitable driving waveform enables the desired flow conditions to be provided.

Fig. 10 is a comparison of the white states achieved with a conventional homogeneous electrode (left) and with an electrode arrangement of the invention (right). The black dots that result when homogeneous electrodes are used are greatly reduced.

The device works best when the electrode structure is aligned with the cavities. For some types of electrophoretic films, this is easy to implement. For example, one type of electrophoretic display developed and distributed by sipix imaging, inc. Comprises an electrophoretic foil, where each cavity corresponds to a pixel and where all cavities are perfectly aligned in a regular grid (as described with reference to Fig. 1b).

However, the electrophoretic foil developed and distributed by e-ink corp. Uses multiple small microcapsules per pixel which are normally completely unaligned, as shown in Fig. 4. Each pixel is an array of the microcapsules - for example the full image of Fig. 4 may represent a single pixel. This makes it practically impossible to contact every cavity separately and realize the full speed advantage to be gained by using structured electrodes in accordance with the invention.

The invention thus also provides a method of aligning the cells (microcapsules) with the structured electrode arrangement, in which the first substrate which carries the structured electrodes is formed with a series of recesses, for example parallel grooves. In the case of grooves, the sub-electrodes are provided on each side face of each groove. The array of display cells are then provided in the grooves. This enables accurate relative placement between the cells (even if they are not of uniform size) and the sub-electrodes.

Conventional e-ink foils comprise a planar plastic foil which carries a planar electrode structure. The capsules are then glued on the electrode plane, where they form an irregular pattern.

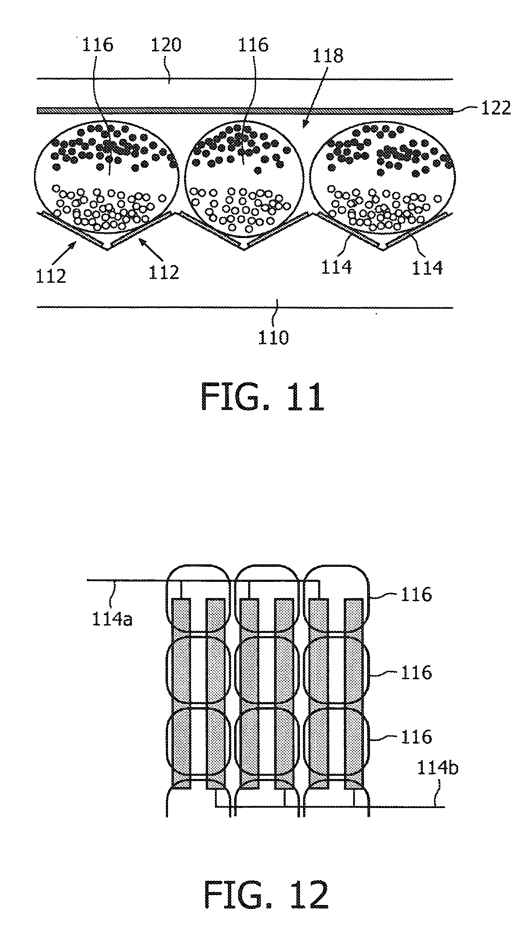

The process of the invention is explained with reference to Fig. 11. The starting point is a plastic foil 110 structured with groves 112. On this substrate, structured electrodes 114 are applied using standard techniques (e.g. Photolithography). When the capsules are glued on the substrate they will automatically arrange themselves according to the groves. The capsules 116 are glued by layer 118 and a top foil 120 carries a second, planar electrode 122.

Not all capsules will arrange themselves in such a fashion, but the majority of capsules will and since the capsules are somewhat elastic (forming hexagonal rather than spherical shapes as can be seen in Fig. 4) the capsules can still fill out most of the area.

By coating one side of each grove with the first sub-electrode and the other side with the second sub-electrode as shown in Fig. 11, it is possible to reproduce the electrode scheme of the invention in e-ink material.

This method of forming the structured electrode pattern requires only one additional step, of structuring the substrate. This can be implemented inexpensively in a roll-to-roll process, for example by embossing.

Fig. 12 shows the arrangement of Fig. 11 in plan view. This has striped electrodes 114a, 114b provided on the groove faces, but other electrode designs can also be used.

The examples above use sub-electrodes with different signals in order to generate asymmetry of the electric field lines with the cells. However, different electrode designs can achieve the desired asymmetry without requiring two different drive voltages and sub-electrodes per cell.

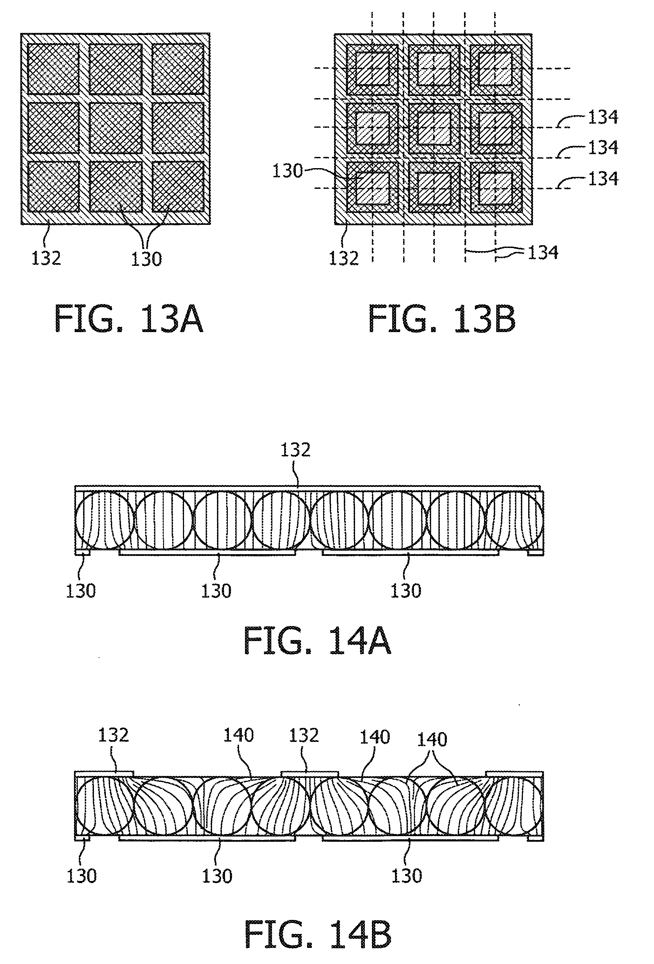

An example is shown in Fig. 13. Fig. 13a shows a conventional electrode layout with pixel electrodes 130 (which connect the pixel tft) and a common electrode 132. The common electrode is a continuous layer, and the pixel electrodes form an array of pads (the row and column lines are not shown).

Fig. 13b shows an example of electrode layout for providing the desired asymmetry. For clarity, the electrophoretic capsules have been left out.

The common electrode arrangement 130 comprises a regular electrode pattern of a continuous layer with a regular array of openings. The pixel electrode arrangement 132 comprises a regular pattern in the form of an array of electrode pads aligned with the openings.

Most of the cells are located at positions which are offset from the intersection of any axes of symmetry of the first and second electrode arrangements. This means that these cells do not have a symmetric arrangement of field lines between the top and bottom electrodes, even though a single voltage is applied to the pixel electrode. This asymmetry then gives a preferential fluid flow within the cell. As many cells as possible are located at positions which give this asymmetry, for example at least 80% of the cells, more preferably at least 90% of the cells, and if possible all of the cells. In the example of Fig. 13, the lines of symmetry of the common electrode and of the pixel electrodes are the same and are shown as 134. A cell centered exactly on the intersection of these lines in the centre of a pixel electrode will have symmetrical field lines, but all others will not.

Fig. 14 shows the arrangements of Fig. 13 in cross section. Fig. 14a corresponds to the arrangement of Fig. 13a and Fig. 14b corresponds to the arrangement of Fig. 13b.

The lines 140 in Fig. 14 represent electric field lines. As is shown in Fig. 14b, the symmetry of the electrical field is essentially broken by structuring the electrodes, instead of arranging them to just cover the whole pixel. This approach is less efficient at increasing the switching speed than the multiple sub-electrodes approach of the previous embodiments, but it is also much cheaper to implement. This arrangement does however suppress the black dots in the manner shown in Fig. 10.

The asymmetry can be obtained by structuring the tft electrodes, the common electrodes or both. The example shown is essentially a grating pattern, but this is not the only possibility.

There are many other variations on the cell arrangements and drive schemes described herein that also fall within the scope of the appended claims, as will be apparent to those skilled in the art.

The invention can be applied to existing electronic ink technology, and for this reason the physical and chemical details of these existing display technologies have not been described in detail. Further details of the e-ink corporation system can be found in WO99/53373 referenced above. Further details of the sipix design are also widely available. Briefly, the cells contain particles dispersed in a suspending fluid. The particles represent 0.1% to 20% of the cell volume, and they are positively or negatively charged. The fluid has a low dielectric constant, and can be clear or dyed.

While the invention has been illustrated and described in detail in the drawings and foregoing description, such illustration and description are to be considered illustrative or exemplary and not restrictive; the invention is not limited to the disclosed embodiments. Variations to the disclosed embodiments can be understood and effected by those skilled in the art in practicing the claimed invention, from a study of the drawings, the disclosure, and the appended claims. In the claims, the word "comprising" does not exclude other elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A moving particle display device, comprising:
an array of display cells, each display cell comprising an enclosed volume containing display particles and a fluid, and
a first electrode arrangement including first and second sub-electrodes (90, 92) and a second electrode arrangement including a counter electrode (63. 122, 132), with the display cells disposed between the first and second electrode arrangements, and the particles being provided for movement between a first region adjacent the first electrode arrangement and a second region adjacent the second electrode arrangement, wherein each display cell is associated with a group of electrodes (90, 92, 63, 122, 132) used to control the particle movement within the display cell, wherein for most of the display cells, the group of electrodes is arranged to provide asymmetry in the electric field lines (140) in the enclosed volume, thereby to influence the particle flow conditions within the display cell,
**characterised in that** an electronic circuit element (94) is connected between the sub-electrodes (90, 92), and the electronic circuit element (94) is arranged to produce a time difference between the voltage at one sub-electrode (90) with respect to the voltage at the other sub-electrode (92) when a voltage waveform is applied to the first electrode arrangement.

2. A device as claimed in claim 1. wherein the sub-electrodes (90, 92) are provided on opposite lateral sides of the cell.

3. A device as claimed in claim 1 or claim 2, wherein the electronic circuit element (94) comprises a capacitor.

4. A device as claimed in any of the preceding claims, wherein the first electrode arrangement comprises a first regular electrode pattern (132) and the second electrode arrangement comprises a second regular electrode pattern (130), wherein a plurality of the cells are located at positions which are offset from the intersection of any axes of symmetry (134) of the first and second electrode arrangements.

5. A device as claimed in claim 4, wherein the first electrode arrangement comprises (132) a common electrode comprising a continuous layer with a regular array of openings, and the second electrode arrangement (130) comprises a regular array of electrode pads aligned with the openings.

6. A device as claimed in any preceding claim, comprising an electrophoretic display device.

7. A device as claimed in any preceding claim, wherein the one of the electrode arrangements is provided over a substrate which comprises a series of recesses (112) for housing the cells.

8. A device as claimed in claim 7, wherein the recesses (112) comprise grooves, and each groove has two side faces, with one of the sub-electrodes on each side face.

9. A method of manufacturing a moving particle display device, comprising:
forming a first substrate (110) with a series of recesses (112),
providing an array of electrodes (114) on the first substrate, the array comprising sub-electrodes which are aligned with respect to the recesses (112), wherein a facing pair of sub-electrodes forms a first electrode set for a display cell,
locating an array of display cells (118) in the recesses, each cell comprising an enclosed volume containing display particles, and
sandwiching the cells (118) between the first substrate and a second substrate (120) which carries a second electrode arrangement,
**characterised in that** the method includes assembling an electronic circuit element (94) between the sub-electrodes, wherein the electronic circuit element (94) is arranged to produce a time difference between the voltage at one sub-electrode (90) with respect to the voltage at the other sub-electrode (92) when a voltage waveform is applied to the first electrode set.

10. A method of driving a moving particle display device, comprising applying drive signals to a first electrode arrangement including first and second sub-electrodes (90, 92), and a second electrode arrangement including a counter electrode (63, 122, 132), with a plurality of display cells sandwiched between the first and second electrode arrangements, the display cells comprising particles which are provided for movement between a first region adjacent the first electrode arrangement and a second region adjacent the second electrode arrangement, wherein the method comprises applying voltage waveforms to the electrode sets to control the particle movement within the cell, wherein for most of the cells, the sets of electrode are arranged to provide asymmetry in the electric field lines (140) in the enclosed volume, thereby to influence the particle flow conditions within the display cell,
**characterised in that** an electronic circuit element (94) is connected between the sub-electrodes (90, 92), and the electronic circuit element (94) is arranged to produce a time difference between the voltage at one sub-electrode (90) with respect to the voltage at the other sub-electrode (92) when a voltage waveform is applied to the first electrode arrangement.

## Patentansprüche

1. Anzeigevorrichtung mit beweglichen Teilchen, die Folgendes umfasst:
ein Array von Anzeigezellen, wobei jede Anzeigezelle ein eingeschlossenes Volumen umfasst, das Anzeigeteilchen und eine Flüssigkeit enthält, und
eine erste Elektrodenanordnung, die erste und zweite Unterelektroden (90, 92) enthält, und eine zweite Elektrodenanordnung, die eine Gegenelektrode (63, 122, 132) enthält, wobei die Anzeigezellen sich zwischen der ersten und der zweiten Elektrodenanordnung befinden und die Teilchen zur Bewegung zwischen einem ersten Bereich, der an die erste Elektrodenanordnung angrenzt, und einem zweiten Bereich, der an die zweite Elektrodenanordnung angrenzt, vorgesehen sind, wobei jede Anzeigezelle mit einer Gruppe von Elektroden (90, 92, 63, 122, 132) in Verbindung steht, die zur Steuerung der Teilchenbewegung in der Anzeigezelle verwendet wird, wobei die Gruppe von Elektroden für die meisten der Anzeigezellen dazu angeordnet ist, für Asymmetrie in den elektrischen Feldlinien (140) in dem eingeschlossenen Volumen zu sorgen, um dadurch die Teilchenflussbedingungen in der Anzeigezelle zu beeinflussen,
**dadurch gekennzeichnet, dass** ein elektronisches Schaltungselement (94) zwischen den Unterelektroden (90, 92) angeschlossen ist und das elektronische Schaltungselement (94) dazu angeordnet ist, einen Zeitunterschied zwischen der Spannung an einer Unterelektrode (90) in Bezug auf die Spannung an der anderen Unterelektrode (92) zu erzeugen, wenn eine Spannungswellenform auf die erste Elektrodenanordnung angewendet wird.

2. Vorrichtung nach Anspruch 1, wobei die Unterelektroden (90, 92) auf gegenüberliegenden lateralen Seiten der Zelle vorgesehen sind.

3. Vorrichtung nach Anspruch 1 oder 2, wobei das elektronische Schaltungselement (94) einen Kondensator umfasst.

4. Vorrichtung nach einem der vorhergehenden Ansprüche, wobei die erste Elektrodenanordnung ein erstes regelmäßiges Elektrodenmuster (132) umfasst und die zweite Elektrodenanordnung ein zweites regelmäßiges Elektrodenmuster (130) umfasst, wobei mehrere der Zellen sich in Positionen befinden, die von dem Schnittpunkt beliebiger Symmetrieachsen (134) der ersten und der zweiten Elektrodenanordnung versetzt sind.

5. Vorrichtung nach Anspruch 4, wobei die erste Elektrodenanordnung (132) eine gemeinsame Elektrode umfasst, die eine durchgehende Schicht mit einem regelmäßigen Array von Öffnungen umfasst, und die zweite Elektrodenanordnung (130) ein regelmäßiges Array von Elektrodenkontakten umfasst, die mit den Öffnungen ausgerichtet sind.

6. Vorrichtung nach einem der vorhergehenden Ansprüche, die eine elektrophoretische Anzeigevorrichtung umfasst.

7. Vorrichtung nach einem der vorhergehenden Ansprüche, wobei die eine der Elektrodenanordnungen über einem Substrat vorgesehen ist, das eine Reihe Aussparungen (112) zur Aufnahme der Zellen umfasst.

8. Vorrichtung nach Anspruch 7, wobei die Aussparungen (112) Nuten umfassen und jede Nute zwei Seitenflächen aufweist, mit einer der Unterelektroden auf jeder Seitenfläche.

9. Verfahren zur Herstellung einer Anzeigevorrichtung mit beweglichen Teilchen, das Folgendes umfasst:
Bilden eines ersten Substrats (110) mit einer Reihe Aussparungen (112),
Bereitstellen eines Arrays von Elektroden (114) auf dem ersten Substrat, wobei das Array Unterelektroden umfasst, die in Bezug auf die Aussparungen (112) ausgerichtet sind, wobei ein sich zugewandtes Paar von Unterelektroden einen ersten Elektrodensatz für eine Anzeigezelle bildet,
Positionieren eines Arrays von Anzeigezellen (118) in den Aussparungen, wobei jede Zelle ein eingeschlossenes Volumen umfasst, das Anzeigeteilchen enthält, und
Einschieben der Zellen (118) zwischen das erste Substrat und ein zweites Substrat (120), das eine zweite Elektrodenanordnung trägt,
**dadurch gekennzeichnet, dass** das Verfahren das Einsetzen eines elektronischen Schaltungselements (94) zwischen den Unterelektroden beinhaltet, wobei das elektronische Schaltungselement (94) dazu angeordnet ist, einen Zeitunterschied zwischen der Spannung an einer Unterelektrode (90) in Bezug auf die Spannung an der anderen Unterelektrode (92) zu erzeugen, wenn eine Spannungswellenform auf den ersten Elektrodensatz angewendet wird.

10. Verfahren zum Ansteuern einer Anzeigevorrichtung mit beweglichen Teilchen, das das Anwenden von Ansteuersignalen auf eine erste Elektrodenanordnung, die erste und zweite Unterelektroden (90, 92) enthält, und eine zweite Elektrodenanordnung, die eine Gegenelektrode (63, 122, 132) enthält, wobei mehrere Anzeigezellen zwischen der ersten und der zweiten Elektrodenanordnung eingeschoben sind, wobei die Anzeigezellen Teilchen umfassen, die zur Bewegung zwischen einem ersten Bereich, der an die erste Elektrodenanordnung angrenzt, und einem zweiten Bereich, der an die zweite Elektrodenanordnung angrenzt, vorgesehen sind, wobei das Verfahren das Anwenden von Spannungswellenformen auf die Elektrodensätze umfasst, um die Teilchenbewegung in der Zelle zu steuern, wobei die Sätze von Elektroden für die meisten der Zellen dazu angeordnet ist, für Asymmetrie in den elektrischen Feldlinien (140) in dem eingeschlossenen Volumen zu sorgen, um dadurch die Teilchenflussbedingungen in der Anzeigezelle zu beeinflussen,
**dadurch gekennzeichnet, dass** ein elektronisches Schaltungselement (94) zwischen den Unterelektroden (90, 92) angeschlossen ist und das elektronische Schaltungselement (94) dazu angeordnet ist, einen Zeitunterschied zwischen der Spannung an einer Unterelektrode (90) in Bezug auf die Spannung an der anderen Unterelektrode (92) zu erzeugen, wenn eine Spannungswellenform auf die erste Elektrodenanordnung angewendet wird.

## Revendications

1. Dispositif d'affichage à particules mobiles, comprenant :
- un réseau de cellules d'affichage, chaque cellule d'affichage comprenant un volume fermé contenant des particules d'affichage et un fluide, et
- un premier agencement d'électrodes comprenant des première et seconde sous-électrodes (90, 92) et un second agencement d'électrodes comprenant une contre-électrode (63, 122, 132), les cellules d'affichage étant disposées entre les premier et second agencements d'électrodes, et les particules étant prévues pour un mouvement entre une première région adjacente au premier agencement d'électrodes et une seconde région adjacente au second agencement d'électrodes, chaque cellule d'affichage étant associée à un groupe d'électrodes (90, 92, 63, 122, 132) utilisé pour commander le mouvement des particules à l'intérieur de la cellule d'affichage, le groupe d'électrodes, pour la plupart des cellules d'affichage, étant agencé pour fournir une asymétrie dans les lignes de champ électrique (140) dans le volume fermé, pour influencer ainsi les conditions d'écoulement de particules à l'intérieur de la cellule d'affichage,
**caractérisé par le fait qu'**un élément de circuit électronique (94) est connecté entre les sous-électrodes (90, 92), et que l'élément de circuit électronique (94) est agencé pour produire une différence de temps entre la tension à une sous-électrode (90) par rapport à la tension à l'autre sous-électrode (92) lorsqu'une forme d'onde de tension est appliquée au premier agencement d'électrodes.

2. Dispositif selon la revendication 1, dans lequel les sous-électrodes (90, 92) sont disposées sur des côtés latéraux opposés de la cellule.

3. Dispositif selon la revendication 1 ou 2, dans lequel l'élément de circuit électronique (94) comprend un condensateur.

4. Dispositif selon l'une quelconque des revendications précédentes, dans lequel le premier agencement d'électrodes comprend un premier motif d'électrode régulier (132) et le second agencement d'électrodes comprend un second motif d'électrode régulier (130), une pluralité des cellules étant situées à des positions qui sont décalées par rapport à l'intersection de n'importe quels axes de symétrie (134) des premier et second agencements d'électrodes.

5. Dispositif selon la revendication 4, dans lequel le premier agencement d'électrodes comprend (132) une électrode commune comprenant une couche continue ayant un réseau régulier d'ouvertures, et le second agencement d'électrodes (130) comprend un réseau régulier de plots d'électrode alignés avec les ouvertures.

6. Dispositif selon l'une quelconque des revendications précédentes, comprenant un dispositif d'affichage électrophorétique.

7. Dispositif selon l'une quelconque des revendications précédentes, dans lequel l'un des agencements d'électrodes est disposé sur un substrat qui comprend une série de renfoncements (112) destinés à recevoir les cellules.

8. Dispositif selon la revendication 7, dans lequel les renfoncements (112) comprennent des rainures, et chaque rainure a deux faces latérales, avec l'une des sous-électrodes sur chaque face latérale.

9. Procédé de fabrication d'un dispositif d'affichage à particules mobiles, comprenant :
- la formation d'un premier substrat (110) avec une série de renfoncements (112),
- la disposition d'un réseau d'électrodes (114) sur le premier substrat, le réseau comprenant des sous-électrodes qui sont alignées par rapport aux renfoncements (112), une paire de sous-électrodes en regard formant un premier ensemble d'électrodes pour une cellule d'affichage,
- le positionnement d'un réseau de cellules d'affichage (118) dans les renfoncements, chaque cellule comprenant un volume fermé contenant des particules d'affichage, et
- la prise en sandwich des cellules (118) entre le premier substrat et un second substrat (120) qui porte un second agencement d'électrodes,
**caractérisé par le fait que** le procédé comprend l'assemblage d'un élément de circuit électronique (94) entre les sous-électrodes, l'élément de circuit électronique (94) étant agencé pour produire une différence de temps entre la tension à une sous-électrode (90) par rapport à la tension à l'autre sous-électrode (92) lorsqu'une forme d'onde de tension est appliquée au premier ensemble d'électrodes.

10. Procédé de commande d'un dispositif d'affichage à particules mobiles, comprenant l'application de signaux de commande à un premier agencement d'électrodes comprenant des première et seconde sous-électrodes (90, 92), et à un second agencement d'électrodes comprenant une contre-électrode (63, 122, 132), une pluralité de cellules d'affichage étant prises en sandwich entre les premier et second agencements d'électrodes, les cellules d'affichage comprenant des particules qui sont prévues pour un mouvement entre une première région adjacente au premier agencement d'électrodes et une seconde région adjacente au second agencement d'électrodes, le procédé comprenant l'application de formes d'onde de tension aux ensembles d'électrodes pour commander le mouvement des particules à l'intérieur de la cellule, les ensembles d'électrodes, pour la plupart des cellules, étant agencés pour fournir une asymétrie dans les lignes de champ électrique (140) dans le volume fermé, pour influencer ainsi les conditions d'écoulement de particules à l'intérieur de la cellule d'affichage,
**caractérisé par le fait qu'**un élément de circuit électronique (94) est connecté entre les sous-électrodes (90, 92), et que l'élément de circuit électronique (94) est agencé pour produire une différence de temps entre la tension à une sous-électrode (90) par rapport à la tension à l'autre sous-électrode (92) lorsqu'une forme d'onde de tension est appliquée au premier agencement d'électrodes.
